# EUROPEAN PATENT APPLICATION

(11) **EP 4 693 427 A1**
(43) Date of publication of application: **11.02.2026**
(21) Application number: 25176892.5
(22) Date of filing: 16.05.2025
(51) Int. Cl.: H01M 4/04, H01M 4/62, H01M 4/66, H01M 6/04

(54) **MANUFACTURING METHOD OF ELECTROCHEMICAL DEVICE**

(30) Priority: 05.08.2024 TW 113129240
(71) Applicant: APh ePower Co., Ltd., Kaohsiung City 821 (TW)
(72) Inventor: TSAI, Shih Po Ta, 821 Kaohsiung City (TW); CHANG, Chao-Yu, 821 Kaohsiung City (TW); TSAI, Jeng-Ting, 821 Kaohsiung City (TW)
(74) Representative: Becker, Eberhard

(57) **Abstract**

A manufacturing method of an electrochemical device includes the following. A first electrode is provided, and the first electrode is placed in an aqueous electrolyte (40). Steps (S110, S111, S112, S113, S114, S120) of manufacturing the first electrode include the following. A slurry including a conductive carbon material, a binder, and a solvent is provided. The slurry is coated on a carbon fiber cloth to form a first electrode piece. The first electrode piece is immersed in water to perform a phase conversion process. The first electrode piece is taken out of the water to be dried.

## Description

### BACKGROUND

### Technical Field

The disclosure relates to a manufacturing method of an electrochemical device.

### Description of Related Art

Metal is generally used as an electrode for an electrochemical device. However, when an aqueous electrolyte system is used for the electrochemical device, issues such as hydrogen evolution corrosion and electrochemical corrosion often occur due to influence of a potential window of an electrolyte and a reaction potential.

### SUMMARY

The disclosure provides a manufacturing method of an electrochemical device, which may improve issues such as hydrogen evolution corrosion and electrochemical corrosion of an electrode while having good electrical performance.

A manufacturing method of an electrochemical device in the disclosure includes the following. A first electrode is provided, and the first electrode is placed in an aqueous electrolyte. Steps of manufacturing the first electrode include the following. A slurry including a conductive carbon material, a binder, and a solvent is provided. The slurry is coated on a carbon fiber cloth to form a first electrode piece. The first electrode piece is immersed in water to perform a phase conversion process. The first electrode piece is taken out of the water to be dried.

In an embodiment of the disclosure, the phase conversion process includes mutual replacement of the solvent and the water, so that the binder is agglomerated and solidified in pores of the carbon fiber cloth.

In an embodiment of the disclosure, the conductive carbon material includes carbon black, acetylene black, ketjen black, carbon nanotubes, or a combination thereof, and a weight ratio of the conductive carbon material to the slurry is between 4.6 wt% and 10 wt%.

In an embodiment of the disclosure, the binder includes polyvinylidene fluoride, polytetrafluoroethylene, or a combination thereof, and a weight ratio of the binder to the slurry is between 2.7 wt% and 5 wt%.

In an embodiment of the disclosure, the solvent includes N-methylpyrrolidone, and a weight ratio of the solvent to the slurry is between 85 wt% and 92.7 wt%.

In an embodiment of the disclosure, a weight solid content of the slurry ranges from 7.3% to 15%.

In an embodiment of the disclosure, a thickness of the carbon fiber cloth ranges from 90 micrometers (um) to 110 um.

In an embodiment of the disclosure, a thickness of the first electrode ranges from 120 um to 140 um.

In an embodiment of the disclosure, the aqueous electrolyte includes the water and metal salts, and the metal salts include 1-ethyl-3-methylimidazolium chloride, aluminum sulfonate, zinc chloride, lithium chloride, manganese sulfate, zinc sulfate, aluminum nitrate, or a combination thereof.

In an embodiment of the disclosure, the manufacturing method of the electrochemical device further includes the following. A second electrode is provided. The second electrode includes aluminum metal, zinc metal, magnesium metal, calcium metal, sodium metal, potassium metal, or a compound thereof.

Based on the above, in the disclosure, the composite carbon paper electrode is used to replace the metal electrode, and the phase conversion process is introduced in the steps of manufacturing the electrode to improve the adhesion between the slurry and the carbon fiber cloth. In this way, the issues such as hydrogen evolution corrosion and electrochemical corrosion of the electrode may be improved while having the good electrical performance.

In order for the aforementioned features and advantages of the disclosure to be more comprehensible, embodiments accompanied with drawings are described in detail below.

### BRIEF DESCRIPTION OF THE DRAWINGS

FIG. 1 is a schematic partial flow chart of a manufacturing method of an electrochemical device according to an embodiment of the disclosure.
FIG. 2 is a schematic view of results of a coulombic efficiency test of the embodiments.
FIG. 3 is a schematic view of results of a charge and discharge capacity test of the embodiments.
FIG. 4 is a schematic view of a three-pole electrochemical cell used for testing.

### DETAILED DESCRIPTION OF DISCLOSED EMBODIMENTS

In the following detailed description, for purposes of explanation and not limitation, exemplary embodiments disclosing specific details are set forth in order to provide a thorough understanding of the various principles of the disclosure. It will be apparent, however, to one of ordinary skill in the art, having been benefited from this disclosure, that the present disclosure may be practiced in other embodiments that depart from the specific details disclosed herein. Furthermore, descriptions of commonly-known devices, methods, and materials may be omitted so as not to shift the focus from the description of the various principles of the present disclosure.

The disclosure will be described more fully with reference to the drawings of the embodiment. However, the disclosure may also be embodied in various forms and should not be limited to the embodiments described herein.

Unless otherwise defined, all terms (including technical and scientific terms) used herein have the same meaning as commonly understood by persons of ordinary skill in the art to which the disclosure belongs.

The term "between" used in the specification to define a value range is intended to cover a range equal to and between the stated endpoint values. For example, a size range between a first value and a second value means that the size range may cover the first value, the second value, and any value between the first value and the second value.

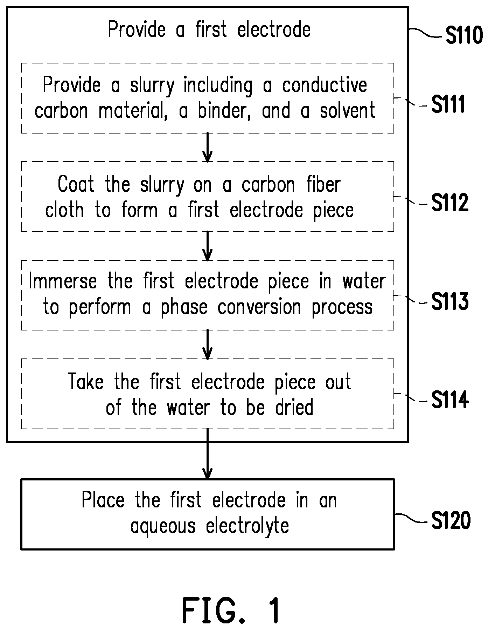

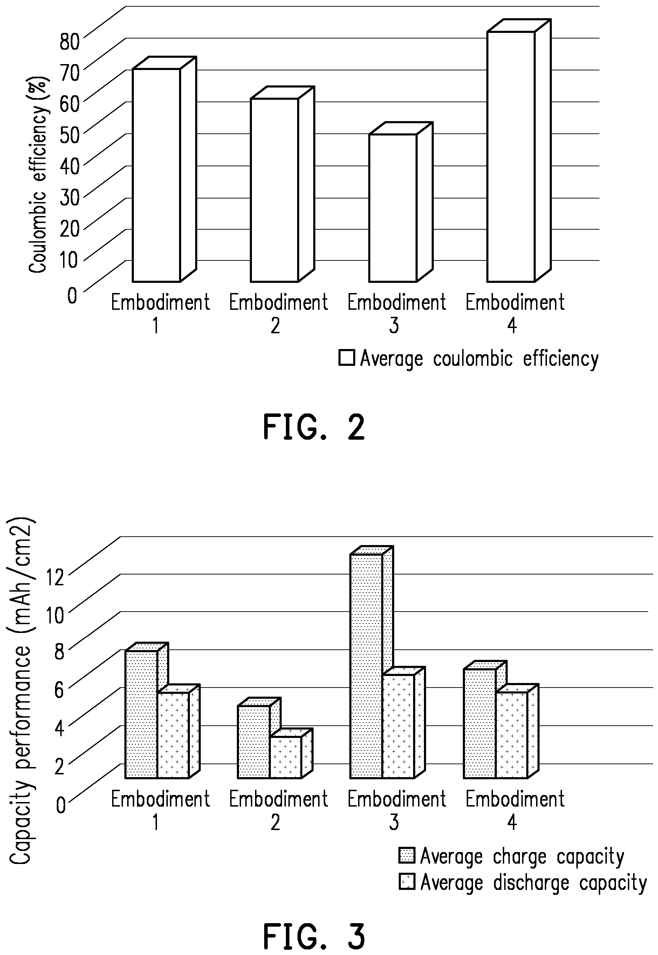

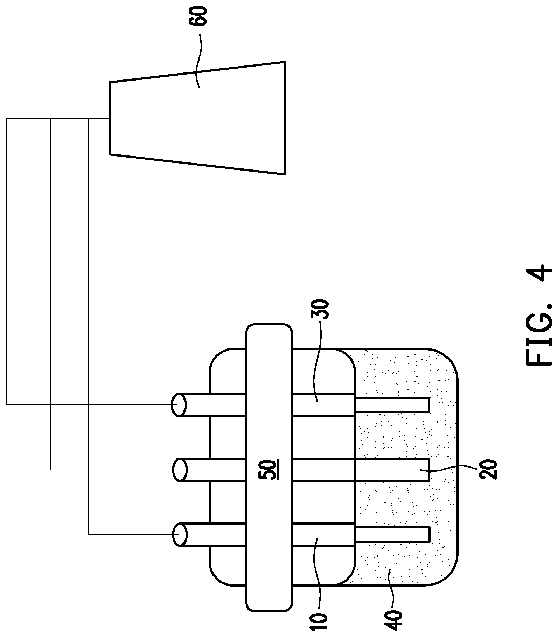

FIG. 1 is a schematic partial flow chart of a manufacturing method of an electrochemical device according to an embodiment of the disclosure. FIG. 2 is a schematic view of results of a coulombic efficiency test of the embodiments. FIG. 3 is a schematic view of results of a charge and discharge capacity test of the embodiments. The coulombic efficiency test and the charge and discharge capacity test are performed by disposing a working electrode 10, a reference electrode 20, a counter electrode 30, an aqueous electrolyte 40, a cover 50, and a potentiostat 60 in a manner of FIG. 4 under the following conditions. Test conditions for the charge and discharge capacity are as follows. The working electrode is immersed in the electrolyte, and an area is set to 1*1cm². Charge and discharge currents are set to 0.5 mA/1 mA/2.5 mA/5 mA/10 mA. Cut-off conditions are set as follows. When the reference electrode is Ag/AgCl, charging is cut off at 1.3 V, and discharging is cut off at 0 V. Test conditions for coulombic efficiency are as follows. Measurement results of charge and discharge capacities are calculated by "discharge capacity in a current cycle"/"charge capacity in a current cycle"*100%, which is the coulombic efficiency.

Referring to FIG. 1, the manufacturing method of the electrochemical device in this embodiment at least includes the following procedures. First, as shown in step S110, a first electrode is provided. Then, as shown in step S120, the first electrode is placed in an aqueous electrolyte. Furthermore, in this embodiment, steps of manufacturing the first electrode may be performed through step S111 (in which a slurry including a conductive carbon material, a binder, and a solvent is provided), step S112 (in which the slurry is coated on a carbon fiber cloth to form a first electrode piece), step S113 (in which the first electrode piece is immersed in water (H2O) to perform a phase conversion process), and step S114 (in which the first electrode piece is taken out of the water to be dried).

Accordingly, in this embodiment, a composite carbon paper electrode (a carbon paper base layer and a carbon film layer thereon) is used to replace a metal electrode (such as aluminum metal, nickel metal, copper metal, or a combination thereof), and the phase conversion process is introduced in the steps of manufacturing the electrode to improve adhesion between the slurry and the carbon fiber cloth. In this way, issues such as hydrogen evolution corrosion and electrochemical corrosion of the electrode may be improved while having good electrical performance. Here, the composite carbon paper electrode may improve capacity performance by virtue of high conductivity and high specific surface area thereof while having feasibility of high current charging and discharging.

In some embodiments, the phase conversion process includes mutual replacement of the solvent and the water, so that the binder is agglomerated and solidified in pores of the carbon fiber cloth. Thus, the slurry may quickly and stably form a conductive film layer on the carbon fiber cloth, and then the manufacturing method of the electrochemical device in this embodiment has advantages of less time cost and high film-forming quality.

In some embodiments, process time of the phase conversion process (e.g., immersion time in the water) is between 5 minutes and 20 minutes, but the disclosure is not limited thereto. The process time of the phase conversion process may be adjusted according to actual compositions of the slurry.

In some embodiments, the first electrode piece is completely immersed in the water. That is, the water enters all the pores of the carbon fiber cloth to more effectively achieve a phase conversion effect. However, the disclosure is not limited thereto.

In some embodiments, the conductive carbon material includes carbon black, acetylene black, ketjen black, carbon nanotubes, or a combination thereof, and a weight ratio of the conductive carbon material to the slurry is between 4.6 wt% and 10 wt%. However, the disclosure is not limited thereto.

In some embodiments, the binder includes polyvinylidene fluoride (PVDF), polytetrafluoroethylene, (PTFE) or a combination thereof, and a weight ratio of the binder to the slurry is between 2.7wt% and 5wt%. However, the disclosure is not limited thereto. The binder may also be other suitable hydrophobic polymers.

In some embodiments, the solvent includes N-methylpyrrolidone (NMP), and a weight ratio of the solvent to the slurry is between 85 wt% and 92.7 wt%. However, the disclosure is not limited thereto.

In some embodiments, the slurry is composed of the conductive carbon material, the binder, and the solvent. That is, a sum of the total weight ratio of the conductive carbon material, the binder, and the solvent to the slurry is 100 wt%, but the disclosure is not limited thereto.

In some embodiments, a weight solid content of the slurry ranges from 7.3% to 15%, but the disclosure is not limited thereto. After drying, the solvent may be completely removed, and only compositions of the weight solid content (such as the binder and the conductive carbon material) are attached to the carbon fiber cloth.

In some embodiments, a thickness of the carbon fiber cloth ranges from 90 um to 110 um, but the disclosure is not limited thereto.

In some embodiments, a thickness of the first electrode ranges from 120 um to 140 um, but the disclosure is not limited thereto.

In some embodiments, the aqueous electrolyte includes water and metal salts, and the metal salts include 1-ethyl-3-methylimidazolium chloride (EMIC), aluminum sulfonate, zinc chloride, lithium chloride, manganese sulfate, zinc sulfate, aluminum nitrate, or a combination thereof. However, the disclosure is not limited thereto.

In some embodiments, the aqueous electrolyte is composed of the water and the metal salts. That is, a sum of a total weight ratio of the water and the metal salts to the aqueous electrolyte is 100 wt%, but the disclosure is not limited thereto.

In some embodiments, the aqueous electrolyte further includes organic acids and/or organic salts. The organic acids are, for example, acetic acid or the like, and the organic salts are, for example, ammonium acetate or the like. However, the disclosure is not limited thereto.

In some embodiments, the manufacturing method of the electrochemical device further includes the following. A second electrode is provided. The second electrode includes aluminum metal, zinc metal, magnesium metal, calcium metal, sodium metal, potassium metal, or a compound thereof, and the second electrode may be a metal foil. However, the disclosure is not limited thereto.

In some embodiments, the electrochemical device is a three-pole electrochemical cell. The first electrode may be the working electrode, and the second electrode may be the counter electrode. However, the disclosure is not limited thereto. The first electrode may be applied to an electrochemical device having a similar electrochemical mechanism. For example, the first electrode and the second electrode may also be applied to a battery including the aqueous electrolyte (for example, the first electrode is used as a positive electrode, and the second electrode is used as a negative electrode). In applications of the battery, the battery has advantages of low voltage drop, stable charge and discharge platforms, and a large capacity under a low current, and also has good charge and discharge performance under a high current.

Effects that may be achieved by the manufacturing method of the electrochemical device in the disclosure will be described in more detail below with reference to the embodiments. In addition, although the following embodiments are described, material details, procedures, etc. used may be appropriately changed without exceeding the scope of the disclosure, and the disclosure should not be construed in a restrictive manner by the embodiments described below.

### <Embodiments 1 to 4>

The aqueous electrolyte is composed of zinc sulfate, manganese sulfate, acetic acid, ammonium acetate, and the water (a molar ratio of a compound of zinc sulfate: manganese sulfate: acetic acid: ammonium acetate is 1:0.9:1:0.2). The electrode is zinc foil. The reference electrode is Ag/AgCl. The working electrode is the composite carbon paper electrode. An electrical test is performed in the three-pole electrochemical cell in FIG. 4. Results are shown in Tables 2 and 3. Steps of manufacturing the working electrode are as follows. First, the weight ratio of each of the compositions in Table 1 is used. N-methylpyrrolidone is used for all the solvents, and polyvinylidene fluoride is used for all the binders. Acetylene black is used for the conductive carbon material in Embodiment 1, carbon nanotubes are used for the conductive carbon material in Embodiment 2, ketjen black is used for the conductive carbon material in Embodiment 3, and carbon black (super P) is used for the conductive carbon material in Embodiment 4, so as to manufacture the slurry. Then, the slurry is coated on the carbon fiber cloth to form the first electrode piece, and then the first electrode piece is immersed in the water to perform the phase conversion process. Finally, the first electrode piece is taken out of the water, and a film-forming surface is dried at 60°C.

Furthermore, in the results of Table 2, at charge and discharge currents of 0.5 mA/cm², the capacity per unit area may reach 10.14 mAh, while the same electrode piece still has a capacity of 1.44 mAh per unit area under 20 times the charge and discharge currents (10 mA/cm²), which means that the working electrode in Embodiment 1 has charge and discharge feasibility in a current range from 0.5 mA/cm² to 10 mA/cm². In the results of Table 3, the working electrode in Embodiment 1 is tested under charge and discharge currents of 2.5 mA/cm², which has excellent coulombic efficiency performance after being charged to different charge capacities. In addition, as shown in FIG. 2 and Table 4, when carbon black is used for the conductive carbon material, the conductive carbon material may have better coulombic efficiency. As shown in FIG. 3 and Table 4, when ketjen black is used for the conductive carbon material, the conductive carbon material may have better charge and discharge performance, and the issue of corrosion may be significantly reduced in the embodiments.

**Table 1**

| | Weight solid content | | |
|---|---|---|---|
| | Conductive carbon material | Binder | Solvent |
| Embodiment 1 | 7wt% | 4.6wt% | 88.4wt% |
| Embodiment 2 | 4.6wt% | 2.7wt% | 92.7wt% |
| Embodiment 3 | 4.6wt% | 2.7wt% | 92.7wt% |
| Embodiment 4 | 10wt% | 5wt% | 85wt% |

**Table 2**

| Charge and discharge currents | 0.5 mA/cm² | 1 mA/cm² | 2.5 mA/cm² | 5 mA/cm² | 10 mA/cm² |
|---|---|---|---|---|---|
| Maximum charge capacity (mAh/cm²) | 19.05 | 11.33 | 6.68 | 3.95 | 2.91 |
| Maximum discharge capacity (mAh/cm²) | 10.14 | 5.94 | 4.46 | 1.87 | 1.44 |
| Charge voltage (compared to Ag/AgCl) | 0.9 | 0.9 | 1.05 | 1.12 | 1.24 |
| Discharge voltage (compared to Ag/AgCl) | 0.65 | 0.6 | 0.57 | 0.47 | 0.3 |

**Table 3**

| | | | | |
|---|---|---|---|---|
| Charge capacity (mAh/cm²) | 0.625 | 1.25 | 2.5 | 3.75 |
| Charge and discharge cycle number | 20 | 20 | 20 | 10 |
| Average coulombic efficiency | 87% | 86.7% | 89% | 84% |

**Table 4**

| | Charge capacity (mAh/cm²) | Discharge capacity (mAh/cm²) | Average coulombic efficiency |
|---|---|---|---|
| Embodiment 1 | 6.7 | 4.5 | 67.16% |
| Embodiment 2 | 3.8 | 2.2 | 57.89% |
| Embodiment 3 | 11.8 | 5.5 | 46.61% |
| Embodiment 4 | 5.7 | 4.5 | 78.95% |

Based on the above, in the disclosure, the composite carbon paper electrode is used to replace the metal electrode, and the phase conversion process is introduced in the steps of manufacturing the electrode to improve the adhesion between the slurry and the carbon fiber cloth. In this way, the issues such as hydrogen evolution corrosion and electrochemical corrosion of the electrode may be improved while having the good electrical performance.

## Claims

1. A manufacturing method of an electrochemical device, comprising:
providing a first electrode; and
placing the first electrode in an aqueous electrolyte (40), wherein steps (S110, S111, S112, S113, S114, S120) of manufacturing the first electrode comprise:
providing a slurry comprising a conductive carbon material, a binder, and a solvent;
coating the slurry on a carbon fiber cloth to form a first electrode piece;
immersing the first electrode piece in water to perform a phase conversion process; and
taking the first electrode piece out of the water to be dried.

2. The manufacturing method of the electrochemical device according to claim 1, wherein the phase conversion process comprises mutual replacement of the solvent and the water, so that the binder is agglomerated and solidified in pores of the carbon fiber cloth.

3. The manufacturing method of the electrochemical device according to claim 1, wherein the conductive carbon material comprises carbon black, acetylene black, ketjen black, carbon nanotubes, or a combination thereof, and a weight ratio of the conductive carbon material to the slurry is between 4.6 wt% and 10 wt%.

4. The manufacturing method of the electrochemical device according to claim 1, wherein the binder comprises polyvinylidene fluoride, polytetrafluoroethylene, or a combination thereof, and a weight ratio of the binder to the slurry is between 2.7 wt% and 5 wt%.

5. The manufacturing method of the electrochemical device according to claim 1, wherein the solvent comprises N-methylpyrrolidone, and a weight ratio of the solvent to the slurry is between 85 wt% and 92.7 wt%.

6. The manufacturing method of the electrochemical device according to claim 1, wherein a weight solid content of the slurry ranges from 7.3% to 15%.

7. The manufacturing method of the electrochemical device according to claim 1, wherein a thickness of the carbon fiber cloth ranges from 90 um to 110 um.

8. The manufacturing method of the electrochemical device according to claim 1, wherein a thickness of the first electrode ranges from 120 um to 140 um.

9. The manufacturing method of the electrochemical device according to claim 1, wherein the aqueous electrolyte (40) comprises the water and metal salts, and the metal salts comprise 1-ethyl-3-methylimidazolium chloride, aluminum sulfonate, zinc chloride, lithium chloride, manganese sulfate, zinc sulfate, aluminum nitrate, or a combination thereof.

10. The manufacturing method of the electrochemical device according to claim 1, further comprising providing a second electrode, wherein the second electrode comprises aluminum metal, zinc metal, magnesium metal, calcium metal, sodium metal, potassium metal, or a compound thereof.
